# EUROPÄISCHE PATENTSCHRIFT

(11) **EP 3 055 338 B1**
(45) Veröffentlichungstag und Bekanntmachung des Hinweises auf die Patenterteilung: **15.11.2017**
(21) Anmeldenummer: 14786125.6
(22) Anmeldetag: 26.09.2014
(51) Int. Cl.: C08F 210/12, C08F 8/20, C08F 8/22

(54) **VERFAHREN ZUM HERSTELLEN VON HALOBUTYL-KAUTSCHUK**
METHOD FOR PRODUCING HALOBUTYL RUBBER
PROCÉDÉ DE PRODUCTION DE CAOUCHOUC HALOBUTYLE

(30) Priorität: 07.10.2013 DE 102013111066
(43) Veröffentlichungstag der Anmeldung: 17.08.2016
(73) Patentinhaber: LIST Technology AG, 4422 Arisdorf (CH)
(72) Erfinder: DIENER, Andreas, 01665 Militz (DE); FLEURY, Pierre-Alain, CH-4433 Ramlinsburg (CH); WITTE, Daniel, 79639 Grenzach-Wyhlen (DE)
(74) Vertreter: Patentanwälte und Rechtsanwalt Weiß, Arat & Partner mbB
(86) Internationale Anmeldenummer: PCT/EP2014/002610
(87) Internationale Veröffentlichungsnummer: WO 2015/051885

(56) Entgegenhaltungen:
- WO-A1-2007/022618
- WO-A1-2010/006983
- US-A- 4 563 506
- US-A- 5 021 500

## Beschreibung

Die Erfindung betrifft ein Verfahren zum Herstellen von Halobutyl-Kautschuk durch Copolymerisation von Isobutyl und Isopren in einem Lösungsmittel zu Butyl-Kautschuk entsprechend dem Oberbegriff von Anspruch 1, sowie eine Vorrichtung hierfür.

### Stand der Technik

Die Produktion von Halobutyl-Kautschuk ist ein kontinuierliches Verfahren in zwei Stufen. Zuerst erfolgt eine Copolymerisation, um Butyl-Kautschuk zu erhalten, und dann die Halogenierung des Butyl-Kautschuks, um Halobutyl-Kautschuk zu erhalten. Das ganze geschieht kontinuierlich.

Der Copolymerisationsprozess von Butyl-Kautschuk ist in Ullmanns Encyclopedia of Industrial Chemistry, 5ed, vol. A23, p. 290, 1993 beschrieben. Die Copolymerisation schliesst zwei Monomere (Isobutylen und Isopren) ein und einen Katalysator/Co-Katalysator, wobei das ganze in einem Lösungsmittel gelöst ist. Das Lösungsmittel kann ein solches sein, welches nicht löslich für ein Suspensions-Verfahren ist, z.B. (Chlormethan), oder ein lösliches Lösungsmittel für ein Lösungsverfahren (z.B. Isopentan, Pentan, Hexan oder anderes). Es ist auch möglich mit einem Suspensions-Verfahren in einem Tankreaktor zu starten oder in einer Serie von Tankreaktoren und ein nicht lösliches durch ein lösliches Mittel zu ersetzen, um die Polymerpartikel aufgelöst für den nächsten Schritt zu erhalten.

Im Grundsatz muss im Tankreaktor eine Suspension oder eine sehr wässrige Lösung erreicht werden, um eine hohe Viskosität zu verhindern. Die Reaktionstemperatur liegt im Bereich von -100°C bis zu -30°C. Die Lösungsmittelmenge kann bis 80% oder darüber betragen.

Die EP 0 209 253 beschreibt einen Copolymerisationsprozess in einem Knetreaktor in fast fester Phase oder pastöser Phase mit wenig Lösungsmittel (29%) verglichen zu dem oben beschriebenen Verfahren (ungefähr 80% oder mehr). Die Reaktionstemperatur liegt bei -45°C. Ein letzter Schritt devolatilisiert den Butyl-Kautschuk.

Die Halogenierung von Butyl-Kautschuk ist in der gleichen Enzyklopädie auf Seite 316 beschrieben. Die Reaktion findet in einem Tankreaktor oder in einer Serie von Tankreaktoren statt. In dieser Schrift ist auch eine Extruderhalogenierung auf Seite 317 beschrieben, wo eine Bulkphase in Kontakt mit Chlor oder Brom gebracht wird (R.C. Kowalski, Chem. Eng. Prog. 85 (1989) no. 5, 67). Im Wesentlichen frei von Wasser werden die hydrohalischen Säuren, als Nebenprodukte gebildet, nicht getrennt und durch Entgasung entfernt, wodurch die Notwendigkeit für eine disperse Phasenneutralisation vermieden wird. Die Säuren disoziieren nicht, was eine Korrosion der Anlage vermeidet. Deshalb kann aufwendiges Konstruktionsmaterial wie z.B. Hastelloy, Inconel oder Titanium vermieden werden.

Die US 4,650,832 (Kowalski et.al., 1985) beschreibt ein Extruderverfahren, um die Halogenierung in der konzentrierten Phase auszuführen, was zu einer wesentlichen Verringerung der Kapitalinvestition führt. Die Lösungskonzentration liegt bei 5 bis 10% und die Reaktionstemperatur bei 100 bis 120°C. Die Abwesenheit von Wasser oder der trockene Halogenierungsprozess zeigten keine Evidenz einer Korrosion nach den Testläufen.

Aus der WO 2010/006983 A1 ist ein integrierter Prozess für die Lösungspolymerisation und eine nachfolgende Halogenierung von Butyl-Kautschuk in einem Medium bekannt. Die Lösungspolymerisation geschieht in einem Polymerisationsreaktor, welcher ein Medium vermischt mit einer Monomermischung, bestehend aus zumindest einem Isoolefinmonomer und einem Multiolefinmonomer, umfasst. Eine nichtreagierte Monomermischung wird von der Kautschuklösung durch ein Destillationsverfahren abgetrennt. Verbleibende Monomere werden gereinigt und in den Reaktor zurückgeführt. Die abgetrennte Kautschuklösung wird dann halogeniert.

Ein Verfahren der o.g. Art ist aus der US 4 563 506 A bekannt. Hierbei geschieht eine kontinuierliche Bromierung von Butyl-Kautschukpolymer durch in Kontakt bringen des Polymers mit einer Bromiersubstanz in einem kontinuierlichen Fluss in einer entsprechenden Vorrichtung. Dies kann beispielsweise in einem Extruder geschehen.

### Aufgabe

Aufgabe der vorliegenden Erfindung ist es, den gesamten Prozess zur Herstellung von Halobutyl-Kautschuk zu vereinfachen, sicherer zu machen, die Investmentkosten zu begrenzen und eine Konkurrrenzfähigkeit mit vollautomatisierten und flexiblen kontinuierlichen (Co-)Polymer, die im fliessenden Prozess bearbeitet werden, herzustellen.

### Lösung der Aufgabe

Zur Lösung der Aufgabe führen die Merkmale des kennzeichnenden Teils von Anspruch 1.

Derartige Vorrichtungen werden auch als Mischkneter bezeichnet. Sie dienen sehr vielfältigen Zwecken. Als erstes ist das Eindampfen mit Lösungsmittelrückgewinnung zu erwähnen, welches chargenweise oder kontinuierlich und oft auch unter Vakuum erfolgt. Hierdurch werden beispielsweise Destillationsrückstände und insbesondere Toluoldiisocyanate behandelt, aber auch Produktionsrückstände mit toxischen oder hochsiedenden Lösungsmitteln aus der Chemie und Pharmaproduktion, Waschlösungen und Lack-Schlämme, Polymerlösungen, Elastomerlösungen aus der Lösemittelpolymerisation, Klebstoffe und Dichtmassen.

In einem Mischkneter kann eine Polykondensationsreaktion, meist kontinuierlich und meist in der Schmelze, stattfinden und wird vor allem verwendet bei der Behandlung von Polyamiden, Polyester, Polyacetaten, Polyimiden, Thermoplaste, Elastomere, Silikone, Harnstoffharze, Phenolharze, Detergentien und Düngemittel. Zum Beispiel findet sie Anwendung auf Polymerschmelzen nach einer Massepolymerisation auf Derivate der Ethacrylsäure.

Stattfinden kann auch eine Polymerisationsreaktion, ebenfalls meist kontinuierlich. Dies wird angewendet auf Polyacrylate, Hydrogele, Polyole, thermoplastische Polymere, Elastomere, syndiotaktisches Polystyrol und Polyacrylamide.

In Mischknetern kann ein Entgasen und/oder Devolatilisieren stattfinden. Angewendet wird dies auf Polymerschmelzen, nach (Co-) Polymerisation von Monomer(en), nach Kondensation von Polyester oder Polyamidschmelzen, auf Spinnlösungen für synthetische Fasern und auf Polymer- oder Elastomergranulate bzw. -pulver im festen Zustand.

Im Wesentlichen werden einwellige und zweiwellige Mischkneter unterschieden. Ein einwelliger Mischkneter ist beispielsweise aus der AT 334 328, der CH 658 798 A5 oder der CH 686 406 A5 bekannt. Dabei ist in einem Gehäuse eine axial verlaufende, mit Scheibenelementen besetzte und um eine Drehachse in einer Drehrichtung drehende Welle angeordnet. Diese bewirkt den Transport des Produktes in Transportrichtung. Zwischen den Scheibenelementen sind Gegenelemente am Gehäuse feststehend angebracht. Die Scheibenelemente sind in Ebenen senkrecht zur Kneterwelle angeordnet und bilden zwischen sich freie Sektoren, welche mit den Ebenen von benachbarten Scheibenelementen Kneträume ausformen.

Eine mehrwellige Misch- und Knetmaschine wird in der CH-A 506 322 beschrieben. Dort befinden sich auf einer Welle radiale Scheibenelemente und zwischen den Scheiben angeordnete axial ausgerichtete Knetbarren. Zwischen diese Scheiben greifen von der anderen Welle rahmenartig geformte Misch- und Knetelemente ein. Diese Misch- und Knetelemente reinigen die Scheiben und Knetbarren der ersten Welle. Die Knetbarren auf beiden Wellen reinigen wiederum die Gehäuseinnenwand.

Diese bekannten zweiwelligen Mischkneter haben den Nachteil, dass sie aufgrund des achtförmigen Gehäusequerschnitts im Bereich der Verbindung der beiden Wellengehäuse eine Schwachstelle aufweisen. In diesem Bereich entstehen bei der Verarbeitung zäher Produkte und/oder bei Prozessen, die unter Druck ablaufen, hohe Spannungen, die nur durch aufwendige konstruktive Massnahmen beherrscht werden können.

Ein Mischkneter der oben genannten Art ist beispielsweise aus der EP 0 517 068 B1 bekannt. Bei ihm drehen in einem Mischergehäuse zwei achsparallel verlaufende Wellen entweder gegensinnig oder gleichsinnig. Dabei wirken auf Scheibenelementen aufgesetzte Mischbarren miteinander. Neben der Funktion des Mischens haben die Mischbarren die Aufgabe, produktberührte Flächen des Mischergehäuses, der Wellen und der Scheibenelemente möglichst gut zu reinigen und damit ungemischte Zonen zu vermeiden. Insbesondere bei stark kompaktierenden, aushärtenden und krustenden Produkten führt die Randgängigkeit der Mischbarren zu hohen örtlichen mechanischen Belastungen der Mischbarren und der Wellen. Diese Kraftspitzen treten insbesondere beim Eingriff der Mischbarren in denjenigen Zonen auf, wo das Produkt schlecht ausweichen kann. Solche Zonen sind z.B. dort gegeben, wo die Scheibenelemente auf der Welle aufgesetzt sind.

Ferner ist aus der DE 199 40 521 A1 ein Mischkneter der o.g. Art bekannt, bei welchem die Tragelemente im Bereich der Knetbarren eine Ausnehmung ausbilden, damit der Knetbarren eine möglichst grosse axiale Erstreckung aufweist. Ein derartiger Mischkneter hat eine hervorragende Selbstreinigung aller produktberührten Flächen des Gehäuses und der Wellen, hat aber die Eigenschaft, dass die Tragelemente der Knetbarren aufgrund der Bahnen der Knetbarren Ausnehmungen erforderlich machen, die zu komplizierten Tragelementformen führen. Daraus resultieren zum einen ein aufwendiges Herstellungsverfahren und zum zweiten bei einer mechanischen Beanspruchung lokale Spannungsspitzen an der Welle und den Tragelementen. Diese Spannungsspitzen, welche hauptsächlich bei den scharfkantigen Ausnehmungen und Dickenänderungen, insbesondere im Bereich, wo die Tragelemente auf den Wellenkern aufgeschweisst sind, auftreten, sind Auslöser für Risse in der Welle und den Tragelementen aufgrund von Materialermüdung.

Um das oben beschriebene Zwei-Stufenverfahren zu vereinfachen, kann die Knetertechnologie mit einem Teil des existierenden Verfahrens kombiniert werden oder kann vollständig neu ausschliesslich auf der Knetertechnologie basieren. Ziel ist es, die Investmentkosten zu begrenzen und eine Konkurrrenzfähigkeit mit vollautomatisierten und flexiblen kontinuierlichen (Co-)Polymer, die im fliessenden Prozess bearbeitet werden, bei einer niedrigen Scherrate (unter 400 s-1) und bei tiefen Temperaturen (< - 30°C, < - 10°C, < - 50°C für die Copolymerisation und < 180°C, < 120°C, < 100°C für die trockene Halognierung unter inerten Konditionen zu erhalten. Ein Dampfstripper in der Halogenierungsverfahrensstufe wird komplett vermieden.

Zur Anmerkung, ein Kneter ist ein Reaktor zwischen einem Tankreaktor (begrenzt in der Viskosität) und einem Extruder (begrenzt in der Verweilzeit, maximal 2 min). Damit kann ein Mischkneter Produkte innerhalb einer Periode von Zeit/Verweilzeit zwischen 8 und 60 oder gar 120 min behandeln, in einer konzentrierten Phase oder fast festen Phase oder in einer pastösen Phase oder hochviskosen Phase, ähnlich Honigphase, oder eben in einer viel höher konzentrierten Phase als Honig. Ein aufgeschmolzenes (Co-)Polymer oder ein (Copolymer) oberhalb seines Schmelzpunktes oder oberhalb seiner Glasübergangstemperatur kann als eine hochviskose Phase oder als pastöse Phase angenommen werden. Eine pastöse oder konzentrierte Polymerphase kann verglichen werden mit einem Kaugummi, der zwischen menschlichen Zähnen mastiziert wird. Ein selbstreinigender kontinuierlicher Kneter hat Knet/Förderelemente, die mit menschlichen Zähnen verglichen werden können, die mastizieren und transportieren einen Kaugummi für eine Kaugummimasse von einem Eingabebereich zu einem Austragsbereich.

Eine ein- oder zweiwellige Austragsvorrichtung wird am Ende des kontinuierlichen Kneters angeordnet, um das Polymer in den Saugbereich einer optionalen Zahnradpumpe zu verbringen. Die Zahnradpumpe setzt das geschmolzene Polymer in einer geheizten Transferröhre unter Druck, um es in den nachfolgenden Kneter oder in eine kontinuierliche Fliessvorrichtung einzugeben. Die geheizte Transferröhre kann mit statischen Mischern ausgerüstet sein. Solch eine geheizte Transferröhre kann auch als ein Wärmeaustauscher angesehen werden, um die Polymertemperatur zu erhöhen. In allen nachfolgenden Figuren ist eine Austragszahnradpumpe und eine Wärmetransferröhre zwischen zwei kontinuierlichen Fliessvorrichtungen angeordnet. Es soll aber klargestellt werden, dass sie optional sind und eine erwärmte Transferröhre kann auch optional ein Wärmetauscher sein, um die Produkttemperatur zu erhöhen.

Chlor Cl2 oder Brom Br2 werden in den Figuren beschrieben. Aber neue oder andere Halogenierungsmittel können auch zugegeben werden, anstelle von Chlor oder Brom. Wenn vorliegend Cl2/N2/s geschrieben wird, wird darunter verstanden, dass Chlor in Stickstoff oder in einem Lösungsmittel aufgelöst ist. Dasselbe gilt für Br2/N2/s.

Lösungsmittel können Isopentan, Pentan, Hexan oder Alcan oder organische Lösungsmittel sein. Wenn ein nicht lösliches Mittel, wie bspw. Chlormethan, gemeint ist, ist es ein Nichtlösungsmittel, um die Polymerpartikel in Suspension zu halten, um eine Suspension unterhalb der Glasübergangstemperatur des Copolymers (-70°C) zu bilden. Es können auch andere Nichtlösungsmittel sein.

Am Ende des Verfahrens wird der Halobuty-Kautschuk mit einem optionalen Stripmittel behandelt, wie bspw. Wasser. Dieses Wasser kann optional einige Neutraiisationsstoffe enthalten, um Reste von säuerlichen Nebenprodukten zu neutralisieren. Mischkneter sind in den Figuren dargestellt mit einem horizontalen Gehäuse und mit einem Dom, der vertikal darauf angeordnet ist. Wenn nur ein Dom in den Figuren angeordnet ist, soll jedoch verstanden werden, dass auch zwei oder drei Dome möglich sind.

Jeder Kneter kann Additive und/oder Stabilisatoren in gasförmiger, flüssiger oder fester Form aufnehmen. Um feste Additive in einem Kneter einzugeben, wird eine Ein- oder Zweiwellenvorrichtung benutzt, um eine kontinuierliche Zufuhr von Pulver in den kontinuierlichen Kneter (Ein- oder Zweiwellenkneter) zu bewirken. Auch eine Stickstoffspülung kann in der Ein- oder Zweiwellenzugabeeinrichtung verwendet werden, um Luft oder Feuchtigkeit zu vermeiden, die in das System gelangen kann. Jede Zugabe in einen Kneter kann an einer oder mehreren Zugabestelle erfolgen.

Die Lösungsmitteltechnologie wird in nur einem Tank dargestellt, es können aber auch eine Serie von Tanks sein.

Die Antriebe der kontinuierlichen Fliessvorrichtungen können elektrisch oder hydraulisch sein.

Immer wenn eine Endgasung beschrieben wird, soll verstanden werden, dass eine Vorkonzentrationsstufe optional eingebunden sein kann, vor einem Hauptverdampfer. Solche eine Vorkonzentrationsstufe wird benötigt, wenn das Polymer sehr in einem Lösungsmittel oder in seinen Monomeren aufgelöst ist. Eine Vorkonzentrationsstufe kann ein Flashpot mit Austragszahnradpumpe und mit oder ohne Vorheizer und mit oder ohne Schleifenrückführung in den Vorheizer sein, oder ein Filmendgaser mit oder ohne Austragszahnradspumpe und mit oder ohne Vorheizer. Das Konstruktionsmaterial kann Hasteloy, inconel, Duplex, Titan, Inox oder Kohlenstoffstahl sein.

Die Erfindung kann in drei Gruppen aufgeteilt werden:
**Gruppe 1** umfasst das bestehende Suspensions-Copolymerisationsverfahren in einem Tankreaktor. Die kontinuierliche Halogenierung in konzentrierter Phase oder trockene Halogenierung ist neu dem existierenden Suspensions-Copolimerisationsprozess aufgepropft.

In einem ersten Ausführungsbeispiel liefert das bekannte Suspensions-Copolimerisationsverfahren im Tankreaktor Chlorbutyl-Kautschuk an einen kontinuierlichen Mischer zur trockenen Halogenierung in konzentrierter Phase. Lösungsmittel kann zugegeben werden, um die Polymerkonzentration einzustellen, den mechanischen Hitzeeintrag abzukühlen und Granulation zwischen den Knetelementen zu vermeiden. Die Lösungsmittelzugabe an mehrere Zugabestellen ist ein wirkungsvoller Weg, um die azidischen Beiprodukte, HCl oder HBr, auszutreiben, so dass dies eine trockene Chlorierung ist, um Chlorbutyl-Kautschuk ClIR herzustellen, oder eine trockene Bromierung, um Brombutyl-Kautschuk BIIR herzustellen. Im letzten Verfahrensschritt werden Reste von flüchtigen Bestandteilen abgezogen. Strippmittel kann Wasser sein, welches optional an mehreren Zugabestellen zugegeben wird.

Einen ähnlichen kontinuierlichen Prozess zeigt ein zweites Ausführungsbeispiel, bei dem der letzte Extruder aus dem Stand der Technik durch einen Kneter ersetzt wird, um die restlichen flüchtigen Bestandteile zu entziehen bei geringen Scheraten und geringen Temperaturen, um eine Polymerdegradation/- Vernetzung zu vermeiden oder zu reduzieren. Das Wasser, welches in dem Polymer enthalten ist, treibt wirkungsvoll die Restmonomere aus.

In einem dritten Ausführungsbeispiel ist die bekannte Suspension kontinuierliche gelöst in einem oder mehreren Tanks in Serie in heissem Lösungsmittel, (ein Nichtlösungsmittel ist ersetzt durch ein Lösungsmittel). Dieses Lösungsmittel kann Hexan oder ein anderen Lösungsmittel sein. Das gelöste Copolymer wird dann optional vorkonzentriert, bevor es in den ersten Kneter zur Hauptverdampfung eingegeben wird, in welcher mechanischer Wärmeeintrag das Lösungsmittel und Restmonomere/Nichtlösungsmittel entgast. Ein zweiter Kneter entzieht den Rest der flüchtigen Bestandteile. Die trockene Halogenierung folgt entsprechend dem ersten Ausführungsbeispiel. Wird der zweite Kneter weggelassen, erfolgt ein geringerer Entzug von Lösungsmittel vor der trockenen Halogenierung. Dies geschieht vor allem dann, wenn die Befürchtung einer Granulierung besteht, wenn Lösungsmittel bei so niedrigen Temperaturen entweicht. Bei einem Kneter, welcher kompaktiert, wird bevorzugt. 5 bis 10% Lösungsmittel benötigt, um eine stabile pastöse Phase bei tiefer Temperatur zu gewährleisten.

Bei einem vierten Ausführungsbeispiel wird eine bekannte Suspension kontinuierlich gelöst in einem oder mehreren Knetern in Serie in heissem Lösungsmittel (ein Nichtlösungsmittel wird durch ein Lösungsmittel ersetzt). Das Lösungsmittel kann Hexan oder ein anderes Lösungsmittel sein. Der Kneter kann mechanische Wärme liefern, um das Nichtlösungsmittel zu entgasen und hilft dabei, die geringe Menge an Lösungsmittel in die Polymermatrix einzumischen. Ein zweiter Kneter ist eine optionale Endstufe, um restliche flüchtige Stoffe zu entfernen. Die trockene Halogenierung geschieht, wie oben beschrieben.

**Gruppe 2** bezieht sich auf das bekannte Lösungsmittel-Copolymersationsverfahren im Tankreaktor. Die kontinuierliche Halogenierung in konzentrierter Phase oder trockene Halogenierung wird neu diesem bekannten Lösungsmittel-Copolymerisationsverfahren hinzugefügt.

Die Ausführungsbeispiele entsprechen denen nach Gruppe 1, nämlich der bekannte Lösungsmitte-Copolimerisationsprozess im Tankreaktor wird mit einem Entgasungsschritt in einem Kneter verbunden. Hierdurch erfolgt ein mechanischer Wärmeeintrag, um den Hauptbestandteil von Lösungsmittel und Restmonomeren zu entgasen. Ein zweiter Kneter ist optional Endstufe, um die restlichen flüssigen Bestandteile zu entfernen. Die optionale Endstufe kann auch weggelassen werden, um eine Granulierung von Copolymer bei tiefer Temperatur zu vermeiden. Trockene Halogenierung folgt wie bekannt.

**Gruppe 3** bezieht sich auf ein neues kontinuierliches konzentriertes Lösungsmittel oder Bulk-Copolymerisationsprozess im Knetreaktor kombiniert mit der kontinuierlichen trockenen Halogenierung in der konzentrierten Phase.

In einem ersten Ausführungsbeispiel wird die Copolymerisation von Isobutylen und Isopren in einem kontinuierlichen Kneter in einer konzentrierten Phase bewerkstelligt. Das ausgetragene Coplymer wird optional in einem zweiten Kneter endbehandelt, um restliche flüchtige Bestandteile zu entziehen. Trockene Halogenierung erfolgt wie gewöhnlich.

Ein zweites Ausführungsbeispiel arbeitet ohne optionale Endstufe, um die Granulierung bei tiefer Temperatur vor der gewöhnlichen trockenen Halogenierung zu vermeiden. Restliche Monomere werden optional am Ende des Knetreaktors durch Eingabe von Lösungsmittel an mehreren Eingabestellen ausgetrieben. Optionale Rückmischknetelemente um die Mitte des Knetreaktors können hilfreich sein, um den Gasraum zwischen der Reaktionszone und der Strippzone zu verstopfen. Eine Alternative zu dem optionalen Rückmischelement könnte eine statische innere Stauplatte sein. Trockene Halogenierung folgt wie gewöhnlich.

In einem letzten Ausführungsbeispiel erfolgt die Polymerisation und die Halogenierung in einem Mischkneter. Rückmischende Knetelemente um die Mitte des Kneters herum können nützlich sein, um den Raum zwischen der Polymerisationszone und Trockenhalogenierungszone zu verstopfen. Eine Alternative zu den optionalen Rückmischelementen könnte eine statische innere Stauplatte sein, Dieses Verfahren verwendet einen Mischkneter, um die Copolymerisation bei tiefer Temperatur auszuführen und auch die Halogenierung bei höherer Temperatur, wobei der mechanische Hitzeeintrag verwendet wird. Eine weitere Endstufe mit optionalem Strippmittel entfernt die restlichen flüchtigen Stoffe. Wasser ist ein mögliches Beispiel. Dem Wasser könnten einige Neutralisierungsmittel zugegeben werden, um azidische Reststoffe zu neutralisieren. Additive/Stabilisatoren sind in dem Knetreaktor möglich und auch in der Endstufe.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine blockschaltbildliche Darstellung des erfindungsgemässen Verfahrens mit im ersten Teil mit Wasser gestrippter Suspension und Extrudern;
Figur 2 eine blockschaltbildliche Darstellung eines weiteren Ausführungsbeispiels des erfindungsgemässen Verfahrens entsprechend Figur 1, wobei hier ein Extruder durch einen Kneter ersetzt ist;
Figur 3 eine blockschaltbildliche Darstellung eines weiteren Ausführungsbeispiels des erfindungsgemässen Verfahrens entsprechend Figur 2, wobei jedoch die Suspension in einem Tankreaktor mit Lösungsmittel gelöst ist;
Figur 4 eine blockschaltbildliche Darstellung eines weiteren Ausführungsbeispiels des erfindungsgemässen Verfahrens entsprechend Figur 3, jedoch ohne Tankreaktor;
Figur 5 eine blockschaltbildliche Darstellung eines weiteren Ausführungsbeispiels des erfindungsgemässen Verfahrens basierend auf einer Lösungs/Bulk-Copolimerisation in einem Knetreaktor;
Figur 6 eine blockschaltbildliche Darstellung eines weiteren Ausführungsbeispiels des erfindungsgemässen Verfahrens mit Lösungs/Bulk-Copolimerisation und Vorkonzentration in einem Knetreaktor;
Figur 7 eine blockschaltbildliche Darstellung eines weiteren Ausführungsbeispiels des erfindungsgemässen Verfahrens mit Copolymerisation und Halogenierung in einem Knetreaktor.

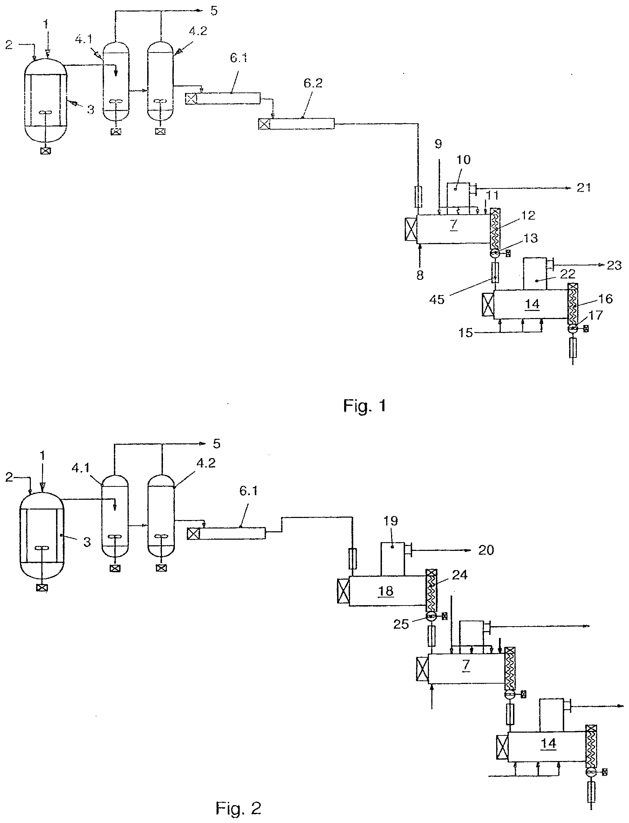

Gemäss Figur 1 werden entsprechend dem Stand der Technik, wie er Ulimanns Encyclopedia of Industrial Chemistry, 5ed Vol. A23, p.290, 1993 beschrieben ist, die beiden Monomere zur Herstellung von Butyl-Kautschuk, nämlich Isobutyl und Isopren, zusammen mit einem Lösungsmittel zur Polymerisation in Reaktor 1 eingegeben. Hinzugefügt werden kann bei 2 ein Katalysator bzw. CoKatalysator. Dabei kann es sich bei dem Lösungsmittel für ein Suspensionsverfahren um eine nichtlösliches Lösungsmittel, bspw. um Chlormethan, oder für ein Lösungsverfahren um ein lösliches Lösungsmittel, z.B. um Isopentan, Pentan, Hexan od. dgl. handeln.

Der so hergestellte Butyl-Kautschuk gelangt aus dem Polymerisationsreaktor 1 in zwei nachfolgende Tanks 4.1 und 4.2, in denen eine gewisse Menge Lösungsmittel bei 5 entfernt werden kann.

Vom Tank 4.2 durchläuft der Butyl-Kautschuk zwei Extruder 6.1 und 6.2 und wird dann erfindungsgemäss zur Halogenierung in einen Halogenierungs-Kneter 7 eingegeben. In dem Halogenierungs-Kneter 7 erfolgt im vorderen Bereich bei 8 die Zugabe eines Halogenierungsmittels, wobei es sich bspw. um Chlor, gelöst in Stickstoff in einem Lösungsmittel oder um Brom, gelöst in einer Lösung handelt. Dies sind aber nur Beispiele.

In dem Halogenierungs-Kneter 7 findet eine trockene Halogenierung in der konzentrierten Phase kontinuierlich statt. Bei 9 wird, vorzugsweise an mehreren Eintragsstellen über die Länge der Halogenierungs-Kneters 7 verteilt, ein Lösungsmittel zugegeben. Mit Hilfe dieses Lösungsmittels kann die Polymerkonzentration in dem Halogenierungs-Kneter 7 eingestellt, der mechanische Wärmeeintrag gekühlt und eine Granulation durch die Knetelementen vermieden werden.

Aus dem Halogenierungs-Kneter 7 werden über einen Brüdendom 10 und einen Austrag 21 azidische Nebenprodukte abgezogen. Erfolgt die Halogenierung mittels Chlor, so handelt es sich bei dem azidischen Nebenprodukt um HCl und ggf. Stickstoff, erfolgt die Halogenierung mittels Brom, handelt es sich bei dem azidischen Nebenprodukt um HBr und ggf. Stickstoff. Zusätzlicher Stickstoff kann im Übrigen auch bei 11 noch in den Halogenierungs-Kneter 7 eingeführt werden.

Die so halogenierte Masse, d.h. Halobutyl-Kautschuk wird über ein Austragsorgan 12 und eine Zahnradpumpe 13 ausgetragen und einem Endstufen-Kneter 14 eingegeben. In diesem Endstufen-Kneter 14 erfolgt das Entfernen der Reste von flüchtigen Bestandteilen, wobei hier als Stripmittel bei 15 bevorzugt Wasser zugegeben wird. Auch diese Wasserzugabe erfolgt an mehreren Stellen über die Länge des Endstufen-Kneters 14 verteilt.

Die Zahnradpumpe 13 setzt das geschmolzene Polymer in einer geheizten Transferröhre 45 unter Druck, um es in den nachfolgenden Kneter oder in eine kontinuierlichen Fliessvorrichtung einzugeben. Die geheizte Transferröhre kann mit statischen Mischern ausgerüstet sein. Solch eine geheizte Transferröhre kann auch als ein Wärmeaustauscher angesehen werden, um die Polymertemperatur zu erhöhen. In allen nachfolgenden Figuren ist eine Austragszahnradpumpe und eine Wärmetransferröhre zwischen zwei kontinuierlichen Fliessvorrichtungen angeordnet. Es soll aber klargestellt werden, dass sie optional sind, und eine erwärmte Transferröhre kann auch optional ein Wärmetauscher sein, um die Produkttemperatur zu erhöhen.

Die flüchtigen Bestandteile des Wassers werden ebenfalls über Brüdendome 22 bei 23 ausgetragen. Das fertige Produkt wird jetzt über ein weiteres Austragsorgan 16 und eine Zahnradpumpe 17 aus dem Endstufen-Kneter 14 ausgetragen und kann bspw. zu Pellets verarbeitet werden.

Im Unterschied zu dem Ausführungsbeispiel nach Figur 1 ist bei dem Ausführungsbeispiel nach Figur 2 der zweite Extruder 6.2 durch einen Vorkonzentrations-Kneter 18 ersetzt. Mittels diesem Vorkonzentrations-Kneter 18 sollen restliche flüssige Bestandteile bei geringer Scherrate und tiefen Temperatur entfernt werden, um eine Polymerdegradation/-vernetzung zu vermeiden bzw. zu reduzieren. Das im Butyl-Kautschuk vorhandene Wasser und die restlichen Monomere sollen über einen Brüdendom 19 bei 20 ausgetragen werden. Die Entfernung der Restmonomere geschieht sehr effizient durch das Wasser, in dem Polymer noch enthalten ist.

An den Vorkonzentrations-Kneter 18 schliesst ein weiteres Austragsorgan 24 an, dem wiederum eine Zahnradpumpe 25 zugeordnet ist.

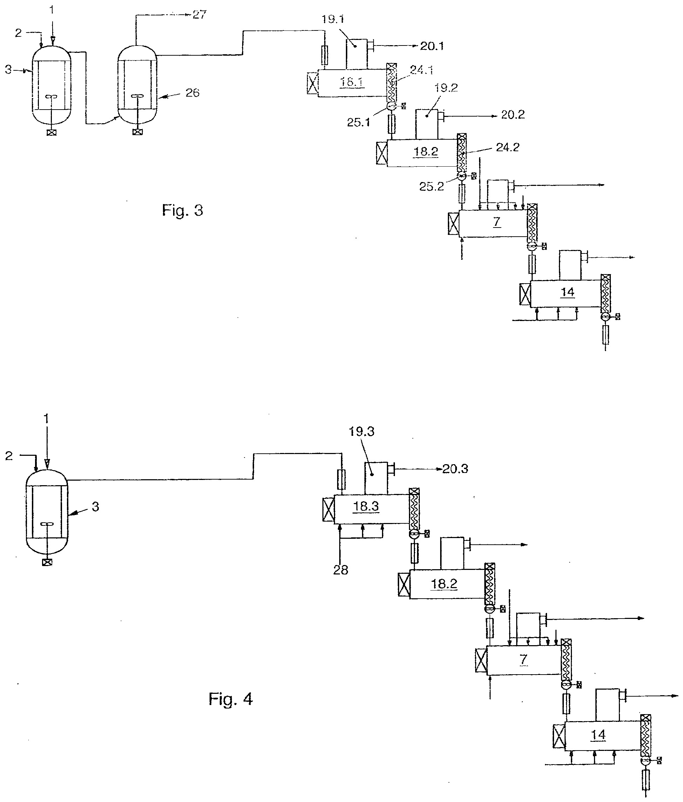

Gemäss dem Ausführungsbeispiel der vorliegenden Erfindung nach Figur 3 sind die beiden Tanks 4.1 und 4.2 durch einen Lösungsmitteltank 26 ersetzt, dem zwei weitere Vorkonzentrations-Kneter 18.1 und 18.2 nachfolgen. Dabei wird die Masse nach dem Tank 3 in den Lösungsmitteltank 26 eingegeben, in dem sich ein heisses Lösungsmittel, vorzugsweise Hexan, befindet. Aus diesem Lösungsmitteltank 26 wird bei 27 flüchtiges Chlormethan bzw. flüchtige Restmonomere abgezogen.

Das gelöste Copolymer, d.h., der Butyl-Kautschuk, wird nachfolgend in die Vorkonzentrations-Kneter 18.1 und 18.2 eingegeben, bei denen jeweils über Brüdendome 19.1 und 19.2 ein Austrag 20.1 bzw. 20.2 für Hexan/Chlormethan und Restmonomere erfolgt, bevor die Masse in den Halogenierungs-Kneter 7 eingeführt wird. Entsprechende Austragsorgane 24.1 und 24.2 sowie Zahnradpumpen 25.1 und 25.2 sind nachfolgend auf die jeweiligen Vorkonzentrations-Kneter 18.1 und 18.2 vorgesehen.

Bei einem weiteren, nicht gezeigten Ausführungsbeispiel der vorliegenden Erfindung kann der zweite Vorkonzentrations-Kneter 18.2 gelassen werden. Dies geschieht vor allem dann, wenn die Gefahr einer Granulation im Vorkonzentrations-Kneter besteht, wenn das Lösungsmittel bei so tiefen Temperaturen verschwindet. 5 bis 10% Lösung wird üblicherweise benötigt, eine sichere pastöse Phase bei Tiefentemperaturen zu gewährleisten.

Gemäss dem Ausführungsbeispiel der Erfindung nach Figur 4 kann der Lösungsmitteltank 26 weggelassen werden, wobei eine direkte Eingabe von Butyl-Kautschuk aus dem Polymerisationsreaktor 3 in einen Vorkonzentrations-Kneter 8.3 erfolgt. In diesem Fall wird das heisse Hexan bei 28, ggf. über mehrere Zugabestellen über die Länge des Kneters 18.3 verteilt, eingegeben. Über einen Brüdendom 19.3 erfolgt dann der Austrag von Restmonomeren und Chlormethan 20.3.

Auch bei diesem gezeigten Ausführungsbeispiel ist es möglich, den zweiten Vorkonzentrations-Kneter 18.2 wegzulassen und die Masse direkt aus dem Vorkonzentrations-Kneter 18.3 in den Halogenierungs-Kneter 7 einzuführen.

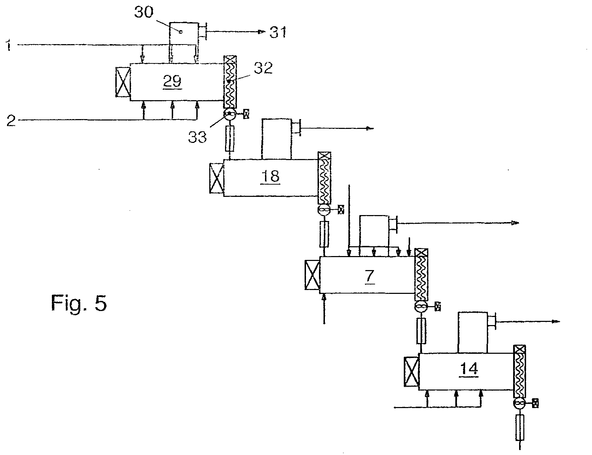

Gemäss dem Ausführungsbeispiel der Erfindung nach Figur 5 erfolgt die Zugabe der Monomere und des Lösungsmittels bei 1 und die Zugabe der Katalysatoren/Co-Katalysatoren und Lösungsmittel bei 2 direkt in einen Copolymerisations-Kneter 29. Danach erfolgt die Copolymerisation kontinuierlich in diesem Kneter. Entstehende Brüden werden über einen Brüdendom 30 und einen Austrag 31 abgezogen.

Das Polymer gelangt dann optimal über ein Austragsorgan 32 und eine Zahnradpumpe 33 in den Vorkonzentrations-Kneter 18 und von dort in den Halogenierungs-Kneter 7.

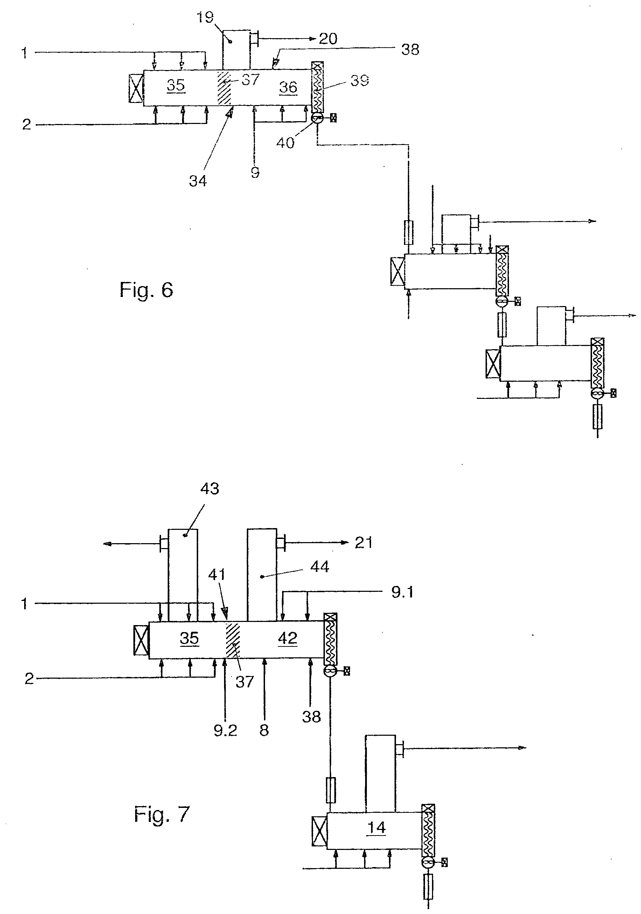

Das Ausführungsbeispiel der vorliegenden Erfindung gemäss Figur 6 unterscheidet sich von demjenigen nach Figur 5 dadurch, dass auch die Vorkonzentration im selben Kneter stattfinden, wie die Copolymerisation. Dieser Kombinations-Kneter 34 ist in zwei Zone 35 und 36 aufgeteilt. In der Zone 35 findet die Copolymerisation statt, in der Zone 36 die Vorkonzentration.

Vorzugsweise werden beide Zonen 35 und 36 voneinander getrennt, was durch beliebige Vorfahren oder Vorrichtungen geschehen kann. Gedacht ist vor allem daran, die Knetelemente im Inneren des Kombinations-Kneters so auszugestaiten, dass in einer etwa mittigen Zone 37 eine Rückmischung erfolgt, was eine gewisse Pfropfenbildung zur Folge hat, so dass hierdurch die Zonen 35 und 36 voneinander getrennt werden. Alternativ kann eine mechanische Pfropfenbildung bspw. eine Stauwand oder ein Stauwehr erfolgen.

In den Kombinations-Kneter 34 ist die Zugabe von Stickstoff bei 38 möglich.

Das so vorkonzentrierte Produkt wird über ein weiteres Austragsorgan 39 und eine Zahnradpumpe 40 in den Halogenisierungskneter 7 übergeführt.

Gemäss dem letzten Ausführungsbeispiel nach Figur 7 erfolgt die Copolymerisation und die Halogenierung in einem Kombi-Kneter 41. Hierbei wird durch einen Pfropfenzone 37 die Copolymerisierungszone 35 von einer Halogenierungszone 42 getrennt. Entsprechend Figur 6 werden der Copolymerisierungszone 35 die Monomere plus Lösungsmittel bei 1 und der Katalysator/Co-Katalysator und ggf. Lösungsmittel bei 2 eingegeben. Entsprechende Brüden werden über einen Brüdendom 43 abgezogen.

Nach der Copolymerisation erfolgt die Überführung des Polymers in die Halogenisierungszone 42, in die bei 8 das Halogenisierungsmittel zugegeben wird. In beide Zonen bei 9.1 und 9.2 wird noch zusätzlich zum Einstellen Konzentration ein Lösungsmittel zugegeben sowie bei 38 ggf. Stickstoff. Ein weitere Brüdendom 44 sorgt für den Austritt 21 von azidischen Nebenprodukten, Lösungsmittel und Stickstoff.

**Bezugszeichenliste**

| | | | | | |
|---|---|---|---|---|---|
| 1 | Monomere+ Chlormethan | 34 | Kombinations-Kneter | 67 | |
| 2 | Katalysator | 35 | Copolymerisationszone | 68 | |
| 3 | Polymerisations-Reaktor | 36 | Vorkonzentrationszone | 69 | |
| 4 | Tank | 37 | Pfropfenzone | 70 | |
| 5 | Austrag | 38 | Stickstoff | 71 | |
| 6 | Extruder | 39 | Austragsorgan | 72 | |
| 7 | Halogenierungs-Kneter | 40 | Zahnradpumpe | 73 | |
| 8 | Halogenierungsmittel | 41 | Kombi-Kneter | 74 | |
| 9 | Lösungsmittel | 42 | Halogenierungszone | 75 | |
| 10 | Brüdendom | 43 | Brüdendom | 76 | |
| 11 | Stickstoff | 44 | Brüdendom | 77 | |
| 12 | Austragsorgan | 45 | Transferröhre | 78 | |
| 13 | Zahnradpumpe | 46 | | 79 | |
| 14 | Endstufen-Kneter | 47 | | | |
| 15 | Wasserzugabe | 48 | | | |
| 16 | Austragsorgan | 49 | | | |
| 17 | Zahnradpumpe | 50 | | | |
| 18 | Vorkonzentrations-Kneter | 51 | | | |
| 19 | Brüdendom | 52 | | | |
| 20 | Austrag | 53 | | | |
| 21 | Austrag | 54 | | | |
| 22 | Brüdendom | 55 | | | |
| 23 | Austrag | 56 | | | |
| 24 | Austragsorgan | 57 | | | |
| 25 | Zahnradpumpe | 58 | | | |
| 26 | Lösungsmitteltank | 59 | | | |
| 27 | Austrag | 60 | | | |
| 28 | Eintrag | 61 | | | |
| 29 | Copolymerisations-Kneter | 62 | | | |
| 30 | Brüdendom | 63 | | | |
| 31 | Austrag | 64 | | | |
| 32 | Austragsorgan | 65 | | | |
| 33 | Zahnradpumpe | 66 | | | |

## Patentansprüche

1. Verfahren zum Herstellen von Halobutyl-Kautschuk durch Copolymerisation von Isobutyl und Isopren in einem Lösungsmittel zu Butyl-Kautschuk, wobei das Lösungsmittel nicht lösend für ein Suspensions-Verfahren oder lösend für ein Lösungsverfahren sein kann, und anschliessender Halogenierung des Butyl-Kautschuks,
**dadurch gekennzeichnet,**
**dass** zumindest die Halogenierung mit einem Halogenierungs-Mittel (8), insbesondere mit Chlor oder Brom, in einem Kombi-Kneter (41) erfolgt, in dem durch eine Pfropfenzone (37) eine Copolymerisierungszone (35) von einer Halogenisierungszone (42) getrennt ist, wobei das Halogenierungs-Mittel (8) in der Halogenisierungszone (42) zugegeben und die im Halogenisierungs-Kneter (7) entstehenden Lösungsmitteldämpfe und gegebenenfalls entstehenden azidische Nebenprodukte (21), insbesondere HCl und HBr, abgezogen werden.

2. Verfahren nach Anspruch 1, **dadurch gekennzeichnet, dass** der Butyl-Kautschuk vor der Halogenierung für eine trockene Halogenierung vorkonzentriert wird.

3. Verfahren nach Anspruch 1 oder 2, **dadurch gekennzeichnet, dass** in den Halogenisierungs-Kneter (7) zur Einstellung der Polymer-Konzentration, zum Kühlen und zur Vermeidung von Granulation ein Lösungsmittel eingegeben wird, wobei das Lösungsmittel (9) an mehreren Stellen über die Länge verteilt in den Halogenisierungs-Kneter (7) eingegeben wird.

4. Verfahren nach wenigstens einem der vorhergehenden Ansprüche, **dadurch gekennzeichnet, dass** Stickstoff (11) oder ein anderes inertes Gas in den Halogenisierungs-Kneter (7) eingeführt wird.

5. Verfahren nach wenigstens einem der vorhergehenden Ansprüche, **dadurch gekennzeichnet, dass** das Produkt nach der Halogenierung einer weiteren Schlussbehandlung in einem Endstufen-Kneter (14) unterzogen wird, wobei in dem Endstufen-Kneter (14) ein Strippen des Produktes mit Wasser (15) erfolgt, welches gegebenenfalls an mehreren Stellen über die Länge verteilt in den Endstufen-Kneter (14) eingeführt wird.

6. Verfahren nach wenigstens einem der vorhergehenden Ansprüche, **dadurch gekennzeichnet, dass** der Halogenierung ein Vorkonzentrations-Kneter (18) vorgeschaltet ist, in welchem dem Butyl-Kautschuk insbesondere Wasser, Lösungsmittel und/oder Rest-Monomer (20) entzogen wird.

7. Verfahren nach wenigstens einem der vorhergehenden Ansprüche, **dadurch gekennzeichnet, dass** vor der Halogenierung der Butyl-Kautschuk mit einem Lösungsmittel versetzt und dieses vor der Halogenierung entfernt wird, wobei der Butyl- Kautschuk in einem Lösungsmitteltank (26) und/oder Vorkonzentrations-Kneter (18.3) mit heissem Lösungsmittel vermischt wird, und wobei dem Lösungsmitteltank (26) zumindest ein Vorkonzentrations-Kneter (18.1) nachgeschaltet ist, in dem das Produkt aufkonzentriert wird.

8. Verfahren nach Anspruch 7, **dadurch gekennzeichnet, dass** als Lösungsmittel heisses Hexan verwendet wird, und wobei aus dem Lösungsmitteltank (26) und/oder aus zumindest einem nachfolgenden Vorkonzentrations-Kneter (18.1, 18.3) Restmonomere und Chlormethan, Isopentan bzw. Hexan abgezogen wird/werden.

9. Verfahren nach wenigstens einem der vorhergehenden Ansprüche, **dadurch gekennzeichnet, dass** auch die Herstellung des Butyl-Kautschuks in einem Copolymerisations-Kneter (29) erfolgt, wobei zwischen den Copolymerisations-Kneter (29) und den Halogenierungs-Kneter (7) ein Vorkonzentrations-Kneter (18) zur Aufkonzentrierung eingeschaltet ist.

10. Verfahren nach wenigstens einem der vorhergehenden Ansprüche, **dadurch gekennzeichnet, dass** auch die Herstellung des Butyl-Kautschuks in einem Copolymerisations-Kneter (29) erfolgt, wobei in einem Kombinations-Kneter (34) sowohl die Copolymerisierung (35) als auch die Aufkonzentration (26) erfolgt.

11. Verfahren nach wenigstens einem der vorhergehenden Ansprüche, **dadurch gekennzeichnet, dass** auch die Herstellung des Butyl-Kautschuks in einem Copolymerisations-Kneter (29) erfolgt, wobei in einem Kombi-Kneter (41) die Copolymerisation und die Halogenierung erfolgt.

12. Verfahren nach Anspruch 10 oder 11, **dadurch gekennzeichnet, dass** die beiden Zonen (35, 36, 42) von Copolymerisation und Aufkonzentrierung bzw. Halogenierung voneinander getrennt werden, wobei die Trennung der beiden Zonen (35, 36, 42) durch Beeinflussung der Strömung des Produktes erfolgt.

13. Verfahren nach Anspruch 18 oder 19, **dadurch gekennzeichnet, dass** die Trennung der beiden Zonen (35, 36, 42) durch mechanische Einbauten in den Kneter erfolgt.

14. Vorrichtung zur Durchführung des Verfahrens nach wenigstens einem der vorhergehenden Ansprüche, **dadurch gekennzeichnet, dass** auf eine Copolymerisierungszone (35) zum Herstellen von Butyl-Kautschuk getrennt durch eine Pfropfenzone (37) eine Halogenisierungszone (42) folgt und eine Zugabe (8) eines Halogenisierungsmittels in der Halogenisierungszone (42) erfolgt.

15. Vorrichtung nach Anspruch 14, **dadurch gekennzeichnet, dass** dem Halogenierungs-Kneter (7) ein Endstufen-Kneter (14) nachfolgt und ihm zumindest ein Vorkonzentrations-Kneter (18-18.3) vorgeschaltet ist.

## Claims

1. Method for producing halobutyl rubber by copolymerisation of isobutyl and isoprene in a solvent to form butyl rubber, wherein the solvent can be non-soluble for a suspension process or be soluble for a solution process, and subsequent halogenation of the butyl rubber,
**characterised**
**in that** at least the halogenation is carried out using a halogenation agent (8), in particular using chlorine or bromine, in a combination kneader (41), in which a copolymerisation zone (35) is separated from a halogenation zone (42) by a plug zone (37), wherein the halogenation agent (8) is fed into the halogenation zone (42) and the solvent vapours arising in the halogenation kneader (7) and any acidic by-products (21) arising, in particular HCl and HBr, are removed.

2. Method according to Claim 1, **characterised in that** the butyl rubber is pre-concentrated before the halogenation for a dry halogenation.

3. Method according to Claim 1 or 2, **characterised in that** a solvent is fed into the halogenation kneader (7) to adjust the polymer concentration, for cooling and to avoid granulation, wherein the solvent (9) is fed into the halogenation kneader (7) at a plurality of locations distributed over its length.

4. Method according to at least one of the preceding claims, **characterised in that** nitrogen (11) or another inert gas is introduced into the halogenation kneader (7).

5. Method according to at least one of the preceding claims, **characterised in that** the product is subjected to a further final treatment in a final-stage kneader (14) after the halogenation, wherein in the final-stage kneader (14) a stripping of the product is carried out using water (15) which is optionally introduced into the final-stage kneader (14) at a plurality of locations distributed over its length.

6. Method according to at least one of the preceding claims, **characterised in that** a pre-concentration kneader (18) is connected upstream of the halogenation, in which kneader in particular water, solvent and/or residual monomer (20) is withdrawn from the butyl rubber.

7. Method according to at least one of the preceding claims, **characterised in that** before the halogenation a solvent is added to the butyl rubber and this solvent is removed before the halogenation, wherein the butyl rubber is mixed with hot solvent in a solvent tank (26) and/or pre-concentration kneader (18.3), and wherein at least one pre-concentration kneader (18.1) is connected downstream of the solvent tank (26), in which pre-concentration kneader (18.1) the product is concentrated.

8. Method according to Claim 7, **characterised in that** hot hexane is used as solvent, and wherein residual monomers and chloromethane, isopentane or hexane is/are removed from the solvent tank (26) and/or from at least one following pre-concentration kneader (18.1, 18.3).

9. Method according to at least one of the preceding claims, **characterised in that** the production of the butyl rubber is also carried out in a copolymerisation kneader (29), wherein a pre-concentration kneader (18) for the concentration is connected between the copolymerisation kneader (29) and the halogenation kneader (7).

10. Method according to at least one of the preceding claims, **characterised in that** the production of the butyl rubber is also carried out in a copolymerisation kneader (29), wherein both the copolymerisation (35) and the concentration (26) are carried out in a combination kneader (34).

11. Method according to at least one of the preceding claims, **characterised in that** the production of the butyl rubber is also carried out in a copolymerisation kneader (29), wherein the copolymerisation and the halogenation are carried out in a combination kneader (41).

12. Method according to Claim 10 or 11, **characterised in that** the two zones (35, 36, 42) of copolymerisation and concentration or halogenation are separated from one another, wherein the separation of the two zones (35, 36, 42) is carried out by influencing the flow of the product.

13. Method according to Claim 18 or 19, **characterised in that** the separation of the two zones (35, 36, 42) is carried out by mechanical fittings in the kneader.

14. Apparatus for performing the method according to at least one of the preceding claims, **characterised in that** a copolymerisation zone (35) for producing butyl rubber is followed, separated by a plug zone (37), by a halogenation zone (42), and a feeding (8) of a halogenation agent into the halogenation zone (42) is carried out.

15. Apparatus according to Claim 14, **characterised in that** the halogenation kneader (7) is followed by a final-stage kneader (14) and is preceded by at least one pre-concentration kneader (18-18.3).

## Revendications

1. Procédé de production de caoutchouc halobutyle par copolymérisation d'isobutyle et d'isoprène dans un solvant pour obtenir du caoutchouc butyle, où le solvant peut être non dissolvant pour un procédé en suspension ou dissolvant pour un procédé en solution, suivie d'une halogénation du caoutchouc butyle,
**caractérisé par le fait**
**qu'**au moins l'halogénation a lieu à par un agent d'halogénation (8), en particulier par du chlore ou du brome, dans un malaxeur combiné (41), dans lequel une zone de copolymérisation (35) est séparée d'une zone d'halogénation (42) par une zone de circulation (37), l'agent d'halogénation (8) étant ajouté dans la zone d'halogénation (42) et les vapeurs de solvant se produisant dans le malaxeur d'halogénation (7) et les sous-produits acides (21) se produisant éventuellement, en particulier HCl et HBr, étant éliminés.

2. Procédé selon la revendication 1, dans lequel le caoutchouc butyle est préconcentré avant l'halogénation, en vue d'une halogénation sèche.

3. Procédé selon la revendication 1, dans lequel un solvant est introduit dans le malaxeur d'halogénation (7) pour ajuster la concentration en polymère, pour le refroidissement et pour éviter une granulation, le solvant (9) étant introduit dans le malaxeur halogéné (7) à plusieurs endroits de manière répartie sur la longueur.

4. Procédé selon au moins l'une des revendications précédentes, **caractérisé par le fait que** de l'azote (11) ou un autre gaz inerte est introduit dans le malaxeur d'halogénation (7).

5. Procédé selon au moins l'une des revendications précédentes, **caractérisé par le fait que** le produit est soumis, après l'halogénation, à un autre traitement final dans un malaxeur de phase finale (14), où dans le malaxeur de phase finale a lieu (14) un strippage du produit par de l'eau (15) qui est éventuellement introduite dans le malaxeur de phase finale (14) à plusieurs endroits de manière répartie sur la longueur.

6. Procédé selon au moins l'une des revendications précédentes, **caractérisé par le fait qu'**en amont de l'halogénation est connecté un malaxeur de pré-concentration (18) dans lequel en particulier de l'eau, du solvant et/ou du monomère résiduel (20) est éliminé du caoutchouc butyle.

7. Procédé selon au moins l'une des revendications précédentes, **caractérisé par le fait qu'**avant l'halogénation est ajouté au caoutchouc butyle un solvant et que ce dernier est éliminé avant l'halogénation, le caoutchouc butyle étant mélangé avec un solvant chaud dans un réservoir de solvant (26) et/ou un malaxeur de pré-concentration (18.3), et qu'en aval du réservoir de solvant (26) est connecté au moins un malaxeur de pré-concentration (18.1) dans lequel est concentré le produit.

8. Procédé selon la revendication 7, **caractérisé par le fait que** comme solvant est utilisé de l'hexane chaud, et que du réservoir de solvant (26) et/ou d'au moins un malaxeur de pré-concentration suivant (18.1, 18.3) est/sont éliminés des monomères résiduels et du chlorométhane, de l'isopentane ou de l'hexane.

9. Procédé selon au moins l'une des revendications précédentes, **caractérisé par le fait que** la production du caoutchouc butyle a également lieu dans un malaxeur de copolymérisation (29), où entre le malaxeur de copolymérisation (29) et le malaxeur d'halogénation (7) est connecté un malaxeur de pré-concentration (18) en vue de la concentration.

10. Procédé selon au moins l'une des revendications précédentes, **caractérisé par le fait que** la production du caoutchouc butyle a également lieu dans un malaxeur de copolymérisation (29), où dans un mélangeur combiné (34) ont lieu tant la copolymérisation (35) que la concentration (26).

11. Procédé selon au moins l'une des revendications précédentes, **caractérisé par le fait que** la production du caoutchouc butyle a également lieu dans un malaxeur de copolymérisation (29), où dans un malaxeur combiné (41) ont lieu la copolymérisation et l'halogénation.

12. Procédé selon la revendication 10 ou 11, **caractérisé par le fait que** les deux zones (35, 36, 42) de copolymérisation et de concentration ou d'halogénation sont séparées l'une de l'autre, la séparation des deux zones (35, 36, 42) ayant lieu en influençant la circulation du produit.

13. Procédé selon la revendication 18 ou 19, **caractérisé par le fait que** la séparation des deux zones (35, 36, 42) a lieu par des structures mécaniques dans le malaxeur.

14. Dispositif pour la mise en oeuvre du procédé selon au moins l'une des revendications précédentes, **caractérisé par le fait qu'**une zone de copolymérisation (35) pour la production de caoutchouc butyle est suivie, séparée par une zone de circulation (37), d'une zone d'halogénation (42) et qu'une addition (8) d'un agent d'halogénation a lieu dans la zone d'halogénation (42).

15. Dispositif selon la revendication 14, **caractérisé par le fait que** le malaxeur d'halogénation (7) est suivi d'un malaxeur de phase finale (14) et qu'en amont de ce dernier est connecté au moins un malaxeur de pré-concentration (18-18.3).
